# EUROPEAN PATENT APPLICATION

(11) **EP 3 156 627 A1**
(43) Date of publication of application: **19.04.2017**
(21) Application number: 16193884.0
(22) Date of filing: 14.10.2016
(51) Int. Cl.: F02C 3/107, F02K 3/068, F02C 7/045

(54) **LOW PRESSURE RATIO FAN ENGINE HAVING A DIMENSIONAL RELATIONSHIP BETWEEN INLET AND FAN SIZE**

(30) Priority: 14.10.2015 US 201514882760
(71) Applicant: United Technologies Corporation, Farmington, CT 06032 (US)
(72) Inventor: LORD, Wesley K., South Glastonbury, CT 06073 (US); MALECKI, Robert E., Storrs, CT 06268 (US); QIU, Yuan J., Glastonbury, CT 06033 (US); ROSE, Becky E., Colchester, CT 06415 (US); GILSON, Jonathan, W.Hatford, CT 06107 (US)
(74) Representative: Hull, James Edward

(57) **Abstract**

A gas turbine engine assembly includes a fan (42) including a plurality of fan blades (92), a diameter of the fan (42) having a dimension D that is based on a dimension of the fan blades (92), each fan blade (92) having a leading edge, a geared architecture (48) configured to drive the fan (42), a turbine section (28) configured to drive the geared architecture (48), a compressor section (24) including a first compressor (44) and a second compressor (52), and an inlet portion (82) forward of the fan (42). A length of the inlet portion (82) has a dimension L between a location of the leading edge of at least some of the fan blades (92) and a forward edge (84) on the inlet portion (82). A dimensional relationship of L/D is between about 0.2 and about 0.45.

## Description

### BACKGROUND

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors and the turbine section includes low and high pressure turbines.

A nacelle surrounds the engine. An inlet section of the nacelle is that portion of the nacelle that is forward of the fan section of the engine. One function of the inlet is to reduce noise. A minimum length of the inlet is typically required for noise reduction with high bypass ratio engines.

While longer inlets tend to improve noise reduction, that feature does not come without cost. A longer inlet is associated with increased weight and external drag. Additionally, the airflow at the inlet during takeoff typically creates a bending moment that is proportional to the length of the inlet. Longer inlets, therefore, tend to introduce additional load on the engine structure under such conditions.

### SUMMARY

A gas turbine engine assembly according to an example of the present disclosure includes a fan including a plurality of fan blades, a diameter of the fan having a dimension D that is based on a dimension of the fan blades, each fan blade having a leading edge, a geared architecture configured to drive the fan, a turbine section configured to drive the geared architecture, a compressor section including a first compressor and a second compressor, the first compressor including fewer stages than the second compressor, and an inlet portion forward of the fan. A length of the inlet portion has a dimension L between a location of the leading edge of at least some of the fan blades and a forward edge on the inlet portion. A dimensional relationship of L/D is between about 0.2 and about 0.45.

In a further embodiment of any of the forgoing embodiments, the dimensional relationship of L/D is between about 0.25 and about 0.45.

In a further embodiment of any of the forgoing embodiments, the dimensional relationship of L/D is between about 0.30 and about 0.40.

In a further embodiment of any of the forgoing embodiments, the dimension L is different at a plurality of locations on the inlet portion. A greatest value of L corresponds to a value of L/D that is at most 0.45. A smallest value of L corresponds to a value of L/D that is at least 0.20.

In a further embodiment of any of the forgoing embodiments, the dimension L varies, the dimensional relationship of L/D based on an average value of L.

In a further embodiment of any of the forgoing embodiments, the dimension L varies between a top of the inlet portion and a bottom of the inlet portion. The dimensional relationship of L/D is based on a value of L near a midpoint between the top and the bottom of the inlet portion.

In a further embodiment of any of the forgoing embodiments, the leading edges of the fan blades are in a reference plane. The dimension L extends along a direction that is generally perpendicular to the reference plane.

In a further embodiment of any of the forgoing embodiments, the engine has a central axis. The reference plane is generally perpendicular to the central axis. The dimension L extends along a direction that is parallel to the central axis.

In a further embodiment of any of the forgoing embodiments, the engine has a central axis. The forward edge on the inlet portion is in a reference plane. The leading edges of the fan blades are in a second reference plane. The dimension L is measured between a first location where the central axis intersects the first reference plane and a second location where the central axis intersects the second reference plane.

In a further embodiment of any of the forgoing embodiments, the first compressor is upstream of the second compressor.

In a further embodiment of any of the forgoing embodiments, the fan is configured to deliver a portion of air into the compressor section and a portion of air into a bypass duct. A bypass ratio which is defined as a volume of air passing to the bypass duct compared to a volume of air passing into the compressor section is greater than or equal to about 10. The fan is a low pressure ratio fan having a pressure ratio between about 1.20 and about 1.50. The geared architecture defines a gear reduction ratio greater than or equal to about 2.3.

In a further embodiment of any of the forgoing embodiments, the turbine section includes a fan drive turbine configured to drive the fan and a first turbine configured to drive one of the first compressor and the second compressor. The first turbine includes fewer stages than the fan drive turbine.

In a further embodiment of any of the forgoing embodiments, the dimensional relationship of L/D is between about 0.30 and about 0.40.

In a further embodiment of any of the forgoing embodiments, the first turbine includes at least two stages.

In a further embodiment of any of the forgoing embodiments, the first compressor includes three stages, and the second compressor includes eight stages.

A gas turbine engine assembly according to an example of the present disclosure includes a fan including a plurality of fan blades, a diameter of the fan having a dimension D that is based on a dimension of the fan blades, each fan blade having a leading edge, a geared architecture configured to drive the fan at a speed that is less than an input speed in the geared architecture, a turbine section configured to drive the geared architecture, and an inlet portion forward of the fan. A length of the inlet portion has a dimension L between a location of the leading edge of at least some of the fan blades and a forward edge on the inlet portion. The inlet portion is free of any bifurcations forward of the fan. A dimensional relationship of L/D is less than or equal to about 0.45.

In a further embodiment of any of the forgoing embodiments, the fan is a single fan stage.

In a further embodiment of any of the forgoing embodiments, the dimensional relationship of L/D is at least about 0.20.

In a further embodiment of any of the forgoing embodiments, the dimensional relationship of L/D is between about 0.30 and about 0.40.

In a further embodiment of any of the forgoing embodiments, the fan is configured to deliver a portion of air into a compressor section and a portion of air into a bypass duct. A bypass ratio, which is defined as a volume of air passing to the bypass duct compared to a volume of air passing into the compressor section, is greater than or equal to about 10. The fan defines a pressure ratio less than about 1.50. The geared architecture defines a gear reduction ratio greater than or equal to about 2.3.

The various features and advantages of at least one disclosed example embodiment will become apparent to those skilled in the art from the following detailed description. The drawings that accompany the detailed description can be briefly described as follows.

### BRIEF DESCRIPTION OF THE DRAWINGS

Figure 1 is a schematic view of an example gas turbine engine.
Figure 2 schematically illustrates selected portions of the example gas turbine engine and demonstrates an example dimensional relationship designed according to an embodiment of this invention.

### DETAILED DESCRIPTION

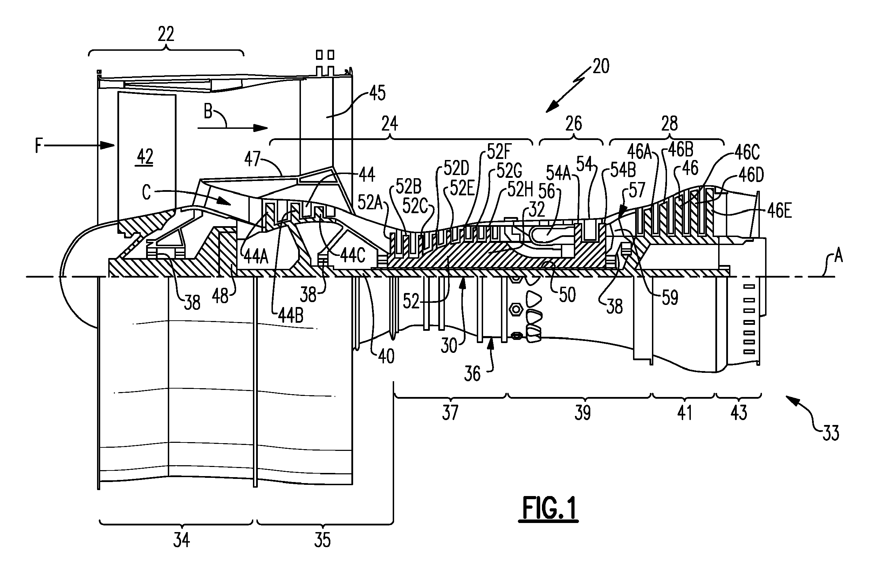

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

In the illustrated example, the engine static structure 36 includes a case structure 33 sometimes referred to as the engine "backbone." The case structure 33 at least partially houses the engine sections 22, 24, 26, 28 and the geared architecture 48. The case structure 33 includes a fan case 34 surrounding a fan 42, an intermediate case (IMC) 35, a high pressure compressor case 37, a thrust case 39, a low pressure turbine case 41, and a turbine exhaust case 43. The core engine case structure 35, 37, 39, 41, 43 is secured to the fan case 34 at the IMC 35. The IMC 35 includes a multiple of circumferentially spaced radially extending guide vanes or struts 45, which radially span the core engine case structure and the IMC 35. An inlet case 47 is positioned aft of the fan 42 to direct airflow along the core flow path C to the compressor section 24. The struts 45 are located aft of the fan 42 such that the fan section 22 is free of any struts 45 or other bifurcations in flow path F forward of the fan 42.

The low speed spool 30 generally includes an inner shaft 40 that connects the fan 42 and a low pressure (or first) compressor section 44 to a low pressure (or first) turbine section 46. In the illustrated example, the low pressure compressor 44 includes fewer stages than the high pressure compressor 52, and more narrowly, the low pressure compressor 44 includes three stages 44A-44C and the high (or second) pressure compressor 52 includes eight stages 52A-52H. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis X.

A combustor 56 is arranged between the high pressure compressor 52 and the high pressure turbine 54. In the illustrated example, the low pressure turbine 46 includes fewer stages than the high pressure turbine 54. In one example, the high pressure turbine 54 includes at least two stages to provide a double stage high pressure turbine 54. In another example, the high pressure turbine 54 includes only a single stage. In yet another example, the low pressure turbine 46 includes five stages 46A-46E, and the high pressure turbine 54 includes two stages 54A, 54B. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 57 of the engine static structure 36 is arranged generally between the high pressure turbine 54 and the low pressure turbine 46. The mid-turbine frame 57 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 57 includes vanes 59, which are in the core airflow path and function as an inlet guide vane for the low pressure turbine 46. Utilizing the vane 59 of the mid-turbine frame 57 as the inlet guide vane for low pressure turbine 46 decreases the length of the low pressure turbine 46 without increasing the axial length of the mid-turbine frame 57. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6:1), with an example embodiment being greater than about ten (10:1). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / (518.7 °R)] ^{0.5} (where °R = K x 9/5). The "Low corrected fan tip speed", as disclosed herein according to one non-limiting embodiment, is less than about 1150 ft/second (350.5 m/s).

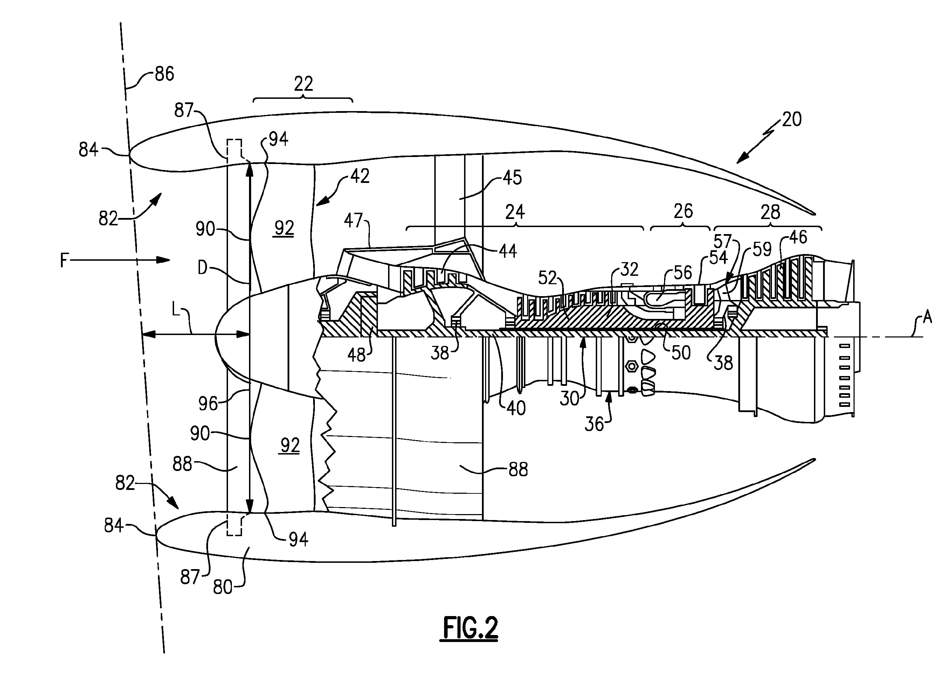

Figure 2 illustrates an example embodiment of the engine 20 with a nacelle or cowling 80 that surrounds the entire engine. An inlet portion 82 is situated forward of the fan 42. In this example, the inlet portion 82 has a leading edge 84, which may be defined by the inlet side cut on the cowling 80. The leading edge 84 is generally within a first reference plane 86. In the illustrated example of Figure 2, the fan 42 is a single fan stage including a plurality of fan blades 92. Struts 45 are located aft of the fan 42 such that the inlet portion 82 is free of any struts 45 or other bifurcations in flow path F forward of the fan blades 92 or fan 42.

The nacelle 80 in some examples includes a flange 87 that is received against a leading edge on a fan case 88. The inlet portion 82 has a length L between a selected location corresponding to the leading edge 84, such as a location within the reference plane 86, and a forward most portion 90 on leading edges on the fan blades 92 of the fan 42. In this example, the length L may be considered an axial length of the inlet portion 82 because the length L is taken along a direction parallel to the central longitudinal axis A of the engine 20. In the illustrated example, the inlet section of the nacelle 80 and the section of the fan case 88 that is forward of the blades 92 collectively establish the overall effective length L. In other words, in this example the length L of the inlet portion 82 includes the length of the inlet section of the nacelle 80 and some of the fan case 88.

The fan blades 92 establish a diameter between circumferentially outermost edges 94. The fan diameter D is shown in Figure 2 as a dimension extending between the edges 94 of two of the fan blades 92 that are parallel to each other and extending in opposite directions away from the central axis A. In the illustration, the forward most portions 90 on the fan blades 92 are within a second reference plane 96. In this example, the second reference plane 96 is oriented generally perpendicular to the central axis A of the engine 20. The first reference plane 86 in this example is oriented at an oblique angle relative to the second reference plane 96 and the central axis A. In the illustrated example the oblique angle of orientation of the first reference plane 86 is approximately 5°.

The length L is selected to establish a desired dimensional relationship between L and D. In some example embodiments, the dimensional relationship of L/D (e.g., the ratio of L/D) is between about 0.2 and 0.45. In some example embodiments, the dimensional relationship of L/D is between about 0.25 and 0.45. In some examples L/D is between about 0.30 and about 0.40. In some example embodiments, the dimensional relationship of L/D is about 0.35.

As can be appreciated from Figure 2, the length L of the inlet portion 82 (i.e., the combined length of the nacelle inlet and the forward section of the fan case) is different at different locations along a perimeter of the fan case 80. The leading edge 84 is further from the second reference plane 96 near the top (according to the drawing) of the engine assembly than it is near the bottom (according to the drawing) of the engine assembly. The greatest length L in this example corresponds to a value for L/D that is no more than 0.45. The smallest length L in the illustrated example corresponds to a value for L/D that is at least 0.20. The value of L/D may vary between those two limits at different locations on the leading edge 84.

In one example where the leading edge 84 has a variable distance from the second reference plane 96, the dimensional relationship L/D is taken based upon a measurement of L that corresponds to an average measurement of the dimension between the leading edge 84 of the inlet portion 82 and the average location of the leading edge on the fan blades 92. Stated another way, L/D in such an embodiment is based on a measurement of the average distance between the reference planes 86 and 96. In another example where the dimension between the first reference plane 86 and the second reference plane 96 varies, the dimension L used for the dimensional relationship L/D is taken at a midpoint between a portion of the leading edge 84 that is most forward and another portion of the leading edge 84 that is most aft.

In another example, the dimension L is measured between a first location where the central longitudinal axis A of the engine intersects the first reference plane 86 and a second location where the axis A intersects the second reference plane 96.

The dimensional relationship of L/D is smaller than that found on typical gas turbine engines. The corresponding dimensional relationship on most gas turbine engines is greater than 0.5. Providing a shorter inlet portion length L facilitates reducing the weight of the engine assembly. A shorter inlet portion length also reduces the overall length of the nacelle and reduces external drag. Additionally, having a shorter inlet portion 82 reduces the bending moment and corresponding load on the engine structure during flight conditions, such as takeoff. A shorter inlet portion 82 also can contribute to providing more clearance with respect to cargo doors and other mechanical components in the vicinity of the engine.

The example engine 20 is a high bypass ratio engine having a larger fan with respect to the engine core components and lower exhaust stream velocities compared to engines with lower bypass ratios. Higher bypass ratio engines tend to have fan noise as a more significant source of noise compared to other sources. The illustrated example includes a shorter inlet yet does not have an associated effective perceived noise level that is noticeably greater than other configurations with longer inlets. One reason for this is that the example engine 20 includes a low pressure ratio fan that operates at a slower fan speed, which is associated with less fan noise. In one example, the fan 42 has a pressure ratio between about 1.20 and about 1.50. A pressure ratio within that range corresponds to the engine operating at a cruise design point in some example implementations. The shorter length L of the inlet portion 82 combined with the low pressure ratio of the fan 42, which has a slower fan speed enabled by the geared architecture of the engine 20, results in an acceptable perceived engine noise level.

Utilizing a dimensional relationship as described above allows for realizing a relatively shorter inlet on a gas turbine engine while maintaining sufficient noise attenuation control. Additionally, the short inlet portion 82 combined with the low pressure ratio fan 42 provides improved propulsive efficiency and lower installed fuel burn compared to conventional gas turbine engine propulsion systems.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A gas turbine engine assembly, comprising:
a fan (42) including a plurality of fan blades (92), a diameter of the fan (42) having a dimension D that is based on a dimension of the fan blades (92), each fan blade (92) having a leading edge;
a geared architecture (48) configured to drive the fan (42);
a turbine section (28) configured to drive the geared architecture (48);
a compressor section (24) including a first compressor (44) and a second compressor (52), the first compressor (44) including fewer stages than the second compressor (52); and
an inlet portion (82) forward of the fan (42), a length of the inlet portion (82) having a dimension L between a location of the leading edge of at least some of the fan blades (92) and a forward edge (84) on the inlet portion (82), wherein a dimensional relationship of L/D is between 0.2 and 0.45.

2. The gas turbine engine assembly of claim 1, wherein
the dimension L is different at a plurality of locations on the inlet portion (82);
a greatest value of L corresponds to a value of L/D that is at most 0.45; and
a smallest value of L corresponds to a value of L/D that is at least 0.20.

3. The gas turbine engine assembly of claim 1, wherein
the dimension L varies; and
the dimensional relationship of L/D is based on an average value of L.

4. The gas turbine engine assembly of claim 1, wherein
the dimension L varies between a top of the inlet portion (82) and a bottom of the inlet portion (82); and
the dimensional relationship of L/D is based on a value of L near a midpoint between the top and the bottom of the inlet portion (82).

5. The gas turbine engine assembly of any one of claims 1 to 4, wherein
the leading edges of the fan blades (92) are in a reference plane (96); and
the dimension L extends along a direction that is generally perpendicular to the reference plane (96), optionally wherein
the engine assembly has a central axis (A);
the reference plane (96) is generally perpendicular to the central axis; and
the dimension L extends along a direction that is parallel to the central axis.

6. The gas turbine engine assembly of any one of claims 1 to 4, wherein
the engine assembly has a central axis (A);
the forward edge (84) on the inlet portion (82) is in a reference plane (86);
the leading edges of the fan blades (92) are in a second reference plane (96); and
the dimension L is measured between a first location where the central axis intersects the first reference plane (86) and a second location where the central axis intersects the second reference plane (96).

7. The gas turbine engine assembly of any preceding claim, wherein the first compressor (44) is upstream of the second compressor (52).

8. The gas turbine engine assembly of any preceding claim, wherein
the fan (42) is configured to deliver a portion of air into the compressor section (24) and a portion of air into a bypass duct;
a bypass ratio which is defined as a volume of air passing to the bypass duct compared to a volume of air passing into the compressor section (24) is greater than or equal to about 10;
the fan (42) is a low pressure ratio fan having a pressure ratio between 1.20 and 1.50; and
the geared architecture (48) defines a gear reduction ratio greater than or equal to about 2.3.

9. The gas turbine engine assembly of any preceding claim, wherein the turbine section (28) includes a fan drive turbine (46) configured to drive the fan (42) and a first turbine (54) configured to drive one of the first compressor (44) and the second compressor (52), the first turbine (54) including fewer stages than the fan drive turbine (46).

10. The gas turbine engine assembly of claim 9, wherein the first turbine (54) includes at least two stages.

11. The gas turbine engine assembly of any preceding claim, wherein the first compressor (44) includes three stages, and the second compressor (52) includes eight stages.

12. A gas turbine engine assembly, comprising:
a fan (42) including a plurality of fan blades (92), a diameter of the fan (42) having a dimension D that is based on a dimension of the fan blades (92), each fan blade (92) having a leading edge;
a geared architecture (48) configured to drive the fan (42) at a speed that is less than an input speed in the geared architecture (48);
a turbine section (28) configured to drive the geared architecture (48); and
an inlet portion (82) forward of the fan (42), a length of the inlet portion (82) having a dimension L between a location of the leading edge of at least some of the fan blades (92) and a forward edge (84) on the inlet portion, the inlet portion (82) being free of any bifurcations forward of the fan (42), a dimensional relationship of L/D being less than or equal to about 0.45, optionally wherein the dimensional relationship of L/D is at least 0.20.

13. The gas turbine engine assembly of claim 12, wherein the fan (42) is configured to deliver a portion of air into a compressor section (24) and a portion of air into a bypass duct;
a bypass ratio, which is defined as a volume of air passing to the bypass duct compared to a volume of air passing into the compressor section (24), is greater than or equal to about 10;
the fan (42) defines a pressure ratio less than 1.50; and
the geared architecture (48) defines a gear reduction ratio greater than or equal to about 2.3.

14. The gas turbine engine assembly of any preceding claim, wherein the fan (42) is a single fan stage.

15. The gas turbine engine assembly of any preceding claim, wherein the dimensional relationship of L/D is between 0.25 and 0.45, optionally between 0.30 and 0.40.
